# EUROPEAN PATENT SPECIFICATION

(11) **EP 3 055 238 B1**
(45) Date of publication and mention of the grant of the patent: **25.07.2018**
(21) Application number: 14840170.6
(22) Date of filing: 21.08.2014
(51) Int. Cl.: B65G 59/10, B65B 25/06, B65B 43/44, B65G 59/06

(54) **DISPENSING DEVICE AND USE**
ABGABEVORRICHTUNG UND VERWENDUNG
DISPOSITIF DE DISTRIBUTION ET UTILISATION

(30) Priority: 28.08.2013 DK 201300481; 06.11.2013 DK 201300630
(43) Date of publication of application: 17.08.2016
(73) Proprietor: Intech International A/S, 9700 Brønderslev (DK)
(72) Inventor: TRUDSLEV, Carsten, DK-9700 Brønderslev (DK)
(74) Representative: Kancelaria Eupatent.pl Sp. z.o.o
(86) International application number: PCT/DK2014/050251
(87) International publication number: WO 2015/028022

(56) References cited:
- EP-A1- 2 186 760
- EP-A1- 2 397 413
- WO-A1-2005/044703
- GB-A- 1 393 810
- JP-B1- S 499 228
- JP-U- S 573 733
- JP-U- S5 647 829
- JP-U- S57 196 606
- JP-Y2- S 537 987
- NL-C1- 1 022 563
- US-A- 3 741 410

## Description

The invention relates to a dispensing device for dispensing trays from a tray stack in a predetermined dispensing direction, where the dispensing device comprises at least one dispensing unit intended for repetitive dispensing of one tray at a time, and the dispensing unit comprises:
- a rotational shaft having a direction of rotation on which rotational shaft are mounted:
- a driving wheel,
- a disc-shaped tray distributor having a first projection with a first front edge in the direction of rotation, and interacting, when the first projection during rotation faces the tray stack, with a first and a second tray from the bottom of the tray stack, and
- a spacer placed against the tray distributor in the dispensing direction,
and that on the rotational shaft is further mounted a disc-shaped relieving unit at a distance from the tray distributor and in the direction opposite to the dispensing direction and which has a second projection having a second front edge in the direction of rotation.

In addition, the invention relates to the use of the dispensing device for dispensing trays, used for food.

From US3741410 is known a dispensing device as described in the preamble of claim 1. The dispensing unit handles a stack of containers, each having an outwardly projecting rim. The dispensing unit comprises a first rotor engaging the edge of the lowest container, as well as a second rotor, which separates the lowest container from the stack of containers.

The second rotor is coupled to the first rotor and has limited mobility relative to the first rotor. The second rotor is arranged so that it can incline relative to the first rotor. Further, the device comprises load-relieving means. The device is made up of many components for handling the stacked containers.

From the International patent application with publication no. WO2005044703 is known a dispensing device for dispensing of stacked members, where the dispensing device comprises at least one dispensing unit having a first and a second support members that support adjacent stacked members so that the first support member releases, i.e. dispenses, a first stacked member, while the second support member still holds on to another stacked member.

However, it has been found that there are some disadvantages of this prior art, namely that in connection with the tray distribution step of this dispensing process the distance between the trays is insufficient when the second support member is to be engaged with the tray stack between the two members (i.e. trays).

The primary reason is the elastic deformation of the lowest trays of the tray stack, which occurs when the easily deformable trays are exposed to the weight of the entire tray stack, which typically can weigh up to 5 kg. The elastic deformation of the lowest trays results in the dispensing process being hampered, delayed, completely made impossible and/or requiring operator intervention.

It is an object of the invention to disclose a dispensing device without the above disadvantages, or at least provide a useful alternative.

The object of the invention is provided by dispensing device of the kind according to claim 1.

The dispensing device with the relieving unit according to the invention ensures that a top, and typically substantial, portion of the tray stack, during the dispensing process is briefly lifted relative to the lowest portion of the tray stack from which the dispensing takes place. As a result, the lowest portion of the tray stack and in particular the two lowest trays therein, is not subjected to the weight of the whole tray stack, but only to the weight of the lowest and smaller portion of the tray stack, and, accordingly, will not be deformed. In this way it is possible to avoid the unwanted deformation of the lowest trays, and the dispensing process can proceed without the mentioned types of problems.

Known methods for relieving of a tray stack use separate electric actuators or pneumatic cylinders and related mechanics to be controlled very precisely with regard to the tray distributor.

In contrast, the dispensing device of the invention comprises only one additional component in the form of the relieving unit, and is therefore much simpler, has higher reliability and has a lower price than the prior art technology.

The function of the tray distributor comprises the interaction of the tray distributor having a second tray from the bottom of the tray stack via the projection of the tray distributor so that the tray distributor interacts with the second tray from the bottom, when the projection faces the tray stack, and does not interact with the tray stack when the projection is turned away from the tray stack.

The interaction of the tray distributor with the tray stack is initiated when the front edge of the projection of the tray distributor during rotation engages with the second tray from the bottom of the tray stack, primarily by engaging an edge of the tray.

During the interaction of the tray distributor with the tray stack, the second tray from the bottom in the dispensing direction is retained, and consequently the trays in the tray stack resting on top as well. In this position, the lowest tray i.e. the tray "below" the tray distributor will not be supported, not even by the spacer, and could therefore be dispensed from the tray stack either by gravity alone or forced downward by the spacer.

When the tray distributor correspondingly does not interact with the tray, i.e. while its projection during rotation is turned away from the tray stack, the tray stack will rest on the edge of the spacer. This ensures that a large number of trays in a single process step are not erroneously dispensed.

The dispensing device according to the invention of claim 1 now comprises a relieving unit as described in the characterising part of claim 1 for relieving the tray stack during the dispensing process.

The relieving unit interacts like the tray distributor with the tray stack via a projection.

The interaction of the relieving unit with the tray stack thereby appears in that the projection of the relieving unit having a front edge in the direction of rotation interacts with a tray higher up the tray stack than the tray distributor when this projection and its front edge during rotation faces the tray stack.

The interaction of the relieving unit with the tray stack is initiated by the front edge of the relieving unit's projection during rotation engages with said tray in the tray stack, primarily by engaging with an edge of the tray.

The relieving unit is an inclined disc, or a disc comprising an inclined part, so that the projection is located on the portion of the inclined disc which is turned furthest away from the tray distributor in a direction opposite to the dispensing direction, i.e. the projection is located on and around the "highest" point of the relieving unit. The relieving unit does not just have a support function like the tray distributor, but a lifting and relieving function. Thus, it is the inclination of the whole or portions of the relieving unit, which ensures that the top portion of the tray stack is not only supported but by contrast is lifted, thereby releasing the lowest trays in the tray stack from the weight of the entire tray stack and the resulting deformation.

In the context of the invention, the "inclined disc" and "inclined, disc-shaped" means that a disc-shaped member having a surface opposite to the dispensing direction, in which either the entire surface or a portion thereof is inclined relative to the dispensing direction, and where the member has either a uniform thickness, or a thickness which varies with the surface perimeter. This comprises structures in which a part of the member is angular relative to the rest of the member and/or constructions where the member does not comprise parts which are angular relative to the rest of the member.

When the front edge of the relieving unit during the rotation engages with the tray stack, the tray, which is just above the relieving unit - as well as the other trays of the top portion of the tray stack resting thereon will slide during the continuous rotation up the at least partially inclined and rotating disc until it reaches a peak, where the top portion of the tray stack is lifted to the maximum. Then, the tray stack slides down the still rotating relieving unit, and when the tray stack is no longer lifted and the projection is turned away from the tray stack, the interacting of the relieving unit with the tray stack ceases.

When the relieving unit no longer interacts with said tray and the top portion of the tray stack, i.e. while its projection during rotation is turned away from the tray stack, then the top portion of the tray stack will rest on the lowest portion of the tray stack, since there is no need for relieving at this point.

The function of the relieving unit is synchronized with the function of the tray distributor.

It is thus essential for the invention that the relieving unit during rotation engages with the tray stack before the engagement of the tray distributor.

To this purpose, the front edge on the projection of the relieving unit, which the front edge is the first portion of the relieving unit, which during rotation interacts with the tray stack, is angular relative to the front edge of the projection of the tray distributor, where the projection correspondingly is the first portion of the tray distributor, which during rotation interacts with the tray stack.

The angle between the front edge on the projection of the relieving unit and the front edge on the projection of the tray distributor is represented by a displacement angle which is positive in the direction of rotation. With such a positive rotation angle is achieved that the front edge of the projection of the relieving unit during rotation "reaches" a position where it can engage with the tray stack earlier than the front edge of the projection of the tray distributor "reaches" an engaging position.

This time delay ensures that the top portion of the tray stack is lifted during the engagement of the relieving unit before the engagement of the tray distributor. The engagement of the tray distributor can thus take place on a relieved lowest portion of the tray stack, which lowest potion consequently is free of elastic deformation, whereby the engagement can take place without the above-mentioned problems.

As stated in claim 2, the projection of the tray distributor is provided by the tray distributor having a first sector of a circle and a second sector of a circle having a larger radius than the first sector of a circle. According to this embodiment of the invention, the second sector of a circle thus constitutes the projection of the tray distributor and it is this second sector of a circle, which interacts with the tray stack. This embodiment of the tray distributor ensures a well-defined interaction with the tray stack.

As stated in claim 3, the projection of the tray distributor is provided by the tray distributor being designed eccentrically having an elliptical shape, and where it is thus the area near a peak of the ellipse, which interacts with the tray stack. Such an embodiment of the tray distributor also ensures a well-defined interaction with the tray stack.

The plane geometry of the relieving unit can be designed to correspond to the plane geometry of the tray distributor.

As stated in claim 4, the projection of the relieving unit is provided so that the relieving unit has a third sector of a circle and a fourth sector of a circle having a larger radius than the third sector of a circle. According to this embodiment of the invention, the fourth sector of a circle thus makes up the projection of the relieving unit and it is this fourth sector of a circle which interacts with the tray stack. This embodiment of the relieving unit ensures a well-defined interaction with the tray stack.

As stated in claim 5, the fourth sector of a circle covers an angle of 120-240°, preferably 160-200°. At such angles of the fourth sector of a circle, a flexible and "soft" lifting process of the top portion of the tray stack is ensured.

As stated in claim 6, the third sector of a circle of the relieving unit is substantially perpendicular relative to the dispensing direction, and the fourth sector of a circle can be inclined relative to the inclination angle relative to the third sector of a circle.

As stated in claim 7, the second front edge comprises a substantially flat surface, which is substantially perpendicular in relation to the dispensing direction.

As stated in claim 8, the relieving unit is formed eccentrically.

It should be noted that the projection of the relieving unit can also result from the relieving unit being formed eccentrically having an elliptic shape, and such that it is the area near a peak of the ellipse that interacts with the tray stack. Such an embodiment of the relieving unit also ensures a well-defined interaction with and lift of the tray stack.

As stated in claim 9, the relieving unit has an eccentricity in the range of 0.1-0.3, which further results in a smooth and "soft" lifting process of the top portion of the tray stack.

Further alternatively, in an example not part of the invention, the relieving unit can be formed with a super-elliptic plane geometry or a rectangular plane geometry with rounded corners.

As stated in claim 10, according to a preferred embodiment of the invention the inclination angle of the relieving unit relative to the dispensing direction is preferably in the angular interval 60-85°, further preferably 70-80°, and further more preferably 75-80°. These angular intervals ensure effective relieving of the tray stack with regard to the engagement of the tray distributor, and in addition these angular intervals do not lift the top portion of the tray stack inexpediently much, and the need for balance support of the top portion of the tray stack is therefore minimised to avoid being tipped over during the lifting and relieving process.

As stated in claim 11, the angle of displacement between the front edges of the relieving unit and of the tray distributor is in the angular range 10-120°, preferably 20-100°, further preferably 20-40°. These angular ranges ensure an expedient time delay between the relieving and the dispensing, so that an elastic deformation of the lowest portion of the tray stack can manage to relax in time before the engagement of the tray distributor.

According to claim 12, the distance between the relieving unit and the tray distributor corresponds to the height of a number of trays in the tray stack in the range of 5-20, preferably 5-10. Such a distance between the relieving unit and the tray distributor ensures an expedient geometry of the dispensing unit, including the possibility to place its drive wheel between the relieving unit and the tray distributor, while simultaneously ensuring that the relieving unit and the tray distributor do not interfere mechanically.

According to claim 13, the dispensing device comprises according to the invention at least 3 dispensing units, preferably at least 4 dispensing units working synchronously, and which can interact with surfaces or corners of the trays in the tray stack for supporting and balancing the tray stack.

According to an example not part of the present invention, the relieving unit and/or the tray distributor can be designed so that its or their surfaces, which interact with the tray stack, are designed with a coating, which makes them smooth and having a low friction against a surface of the trays, e.g. in the form of a coating of polytetrafluoroethylene. This ensures a smooth handling of the trays in the tray stack, which does not adhere to the relieving unit and/or the tray distributor.

According to an example not part of the invention, the relieving unit and/or the tray distributor can alternatively be designed such that its or their surfaces, which interact with the tray stack, are provided with a coating which renders them rough and/or with high friction against a surface of the trays, e.g. in the form of a rubber coating. This ensures an "anti-slip" handling of the trays in the tray stack.

In a further example not part of the invention, the inclined part of the relieving unit comprises the second front edge.

Another aspect of the invention comprises the use of the dispensing device according to the invention for dispensing trays, which are used for food.

According to this aspect which is not part of of the invention, the dispensing device according to the invention is preferably used at a food processing plant.

The invention will now be explained with reference to the drawings, in which:
Fig. 1 comprises Figs. 1a-1h, and shows a dispensing device according to the invention and its function.
Fig. 2 shows a preferred plane geometry of the relieving unit according to the invention.
Fig. 3- shows an alternative preferred plane geometry of the relieving unit according to the invention.
Fig. 4 shows a further alternative embodiment of the relieving unit according to the invention.
Fig. 5 shows the tray distributor and the relieving unit of the dispensing device according to the invention.
Figs. 6a-c show an alternative embodiment of the relieving unit according to the invention

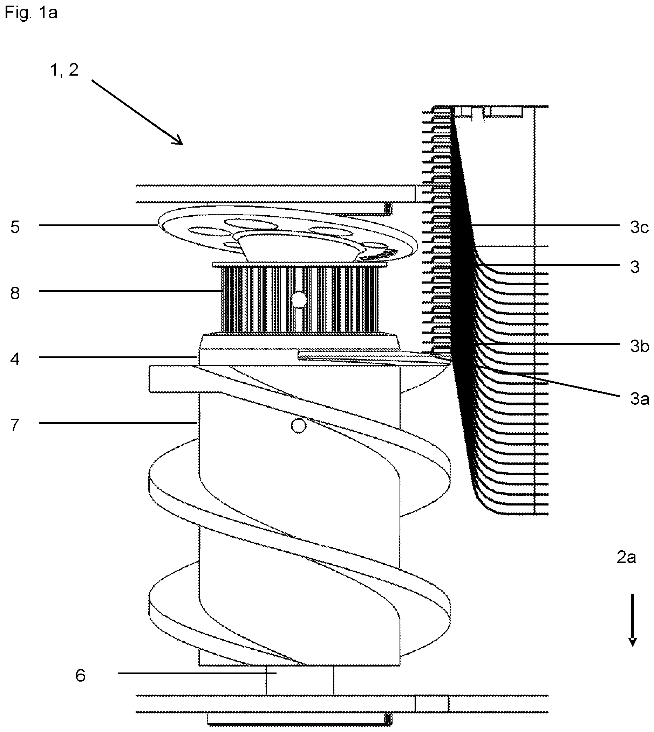

In fig. 1a the dispensing device according to the invention is denoted 1. The dispensing device (1) comprises at least one dispensing unit (2) for dispensing the trays from a tray stack (3) .

At the beginning of a dispensing cycle, the tray stack (3) stands on top of the tray distributor (4), since the tray stack on the tray distributor (4) rests on the lowest tray (3a) in the tray stack (3).

The inclined relieving unit (5), mounted on the rotational shaft (6), is and the spacer (7).

The tray stack (3) cannot balance on a corner of the tray stack (3), so one usually uses a plurality of dispensing units (2), typically 3 or 4. These also serve in combination the object to fix the position of the tray stack (3) in the horizontal level. A toothed belt (not shown) pulls on the drive wheel (8) and ensures synchronous movement of dispensing units.

The tray stack (3) can weigh up to 5 kg, and this causes elastic deformation of the lowest trays, including the lowest tray (3a) and the second tray (3b) from the bottom to such an extent that the tray distributor (4) is not able to correctly engage with the tray stack (3) between the lowest tray (3a) and the second tray (3b) from the bottom.

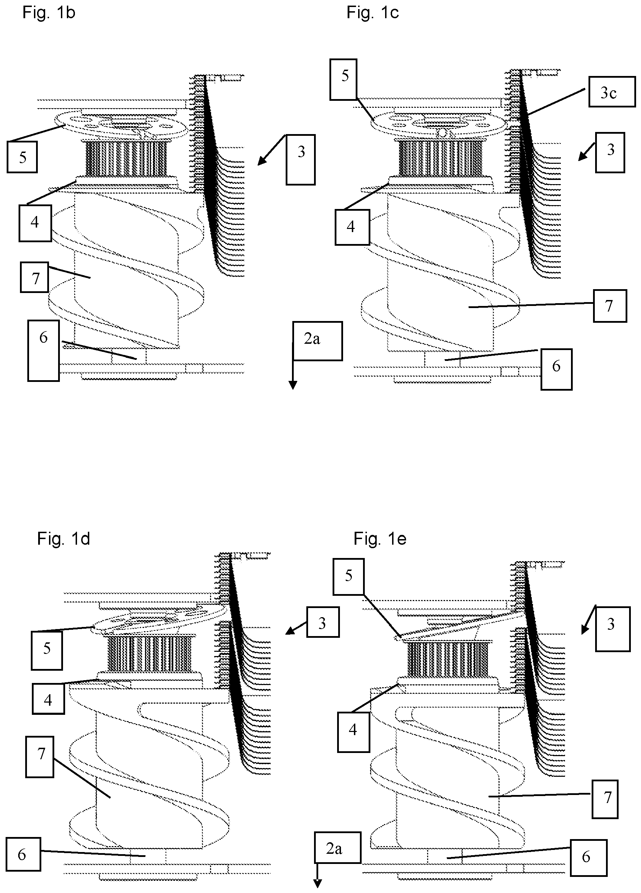

The next stage of the dispensing cycle is shown in fig. 1b. During the rotation of the rotational shaft (6) and thus the tray distributor (4), the tray stack (3) slides forward (downward) in the dispensing direction (2a), and is now carried by the spacer (7), while the tray distributor (4) does not interact with the tray stack (3). The spacer (7) is mounted on the same rotational shaft (6) as the tray distributor (4).

In fig. 1c is shown how the relieving unit (5) in the next step of the dispensing cycle begins to engage with a tray (3c) further up the tray stack (3).

In fig. 1d is shown how the relieving unit (5) during continued rotation lifts the top portion of the tray stack (3), causing the lowest trays to have space for resilience, so the two lowest trays always have the same load.

It is an essential element of the invention that the relieving unit (5) is designed to engage the tray stack (3) before the tray distributor (4).

In fig. 1e is therefore shown how the tray distributor (4) first begins to engage the tray stack (3) when the relieving is at the maximum.

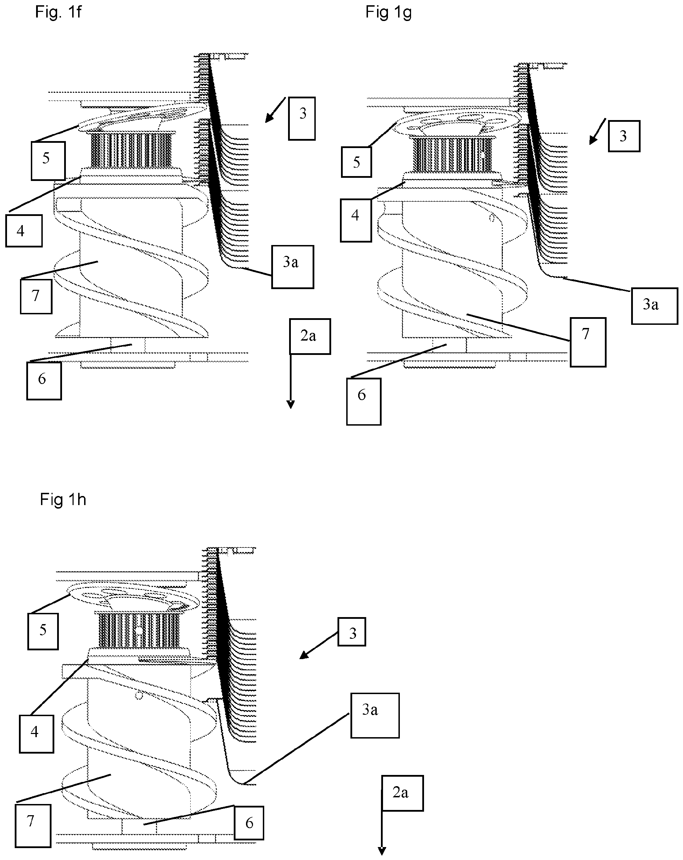

In fig. 1f is shown how the tray distributor (4) further is engaged with the tray stack (3), and how the lowest tray (3a) is dispensed from the tray stack (3) through the gravitational pull, while the relieving unit (5) continuously keeps the top trays of the tray stack (3) lifted and thus keeps the lowest trays of the tray stack (3) relieved.

Alternatively (not shown), the spacer (7) can in this process step be designed so that it forces the lowest tray (3a) downward, regardless of gravitational pull.

In fig. 1g the relieving unit (5) has started to lower the top portion of the tray stack (3), but still keeps the trays in the lowest portion of the tray stack (3) relieved until the tray distributor (4) or at least its front edge or first front edge (not shown) is completely free of the tray stack (3). The lowest tray (3a) is now in free fall.

In fig. 1h is the dispensing cycle completed, apart from an additional 270 degrees, which the rotational shaft (6) has to turn, before the lowest tray (3a) is completely free of the spacer (7). This ensures that the lowest tray (3a) is completely free of the other trays.

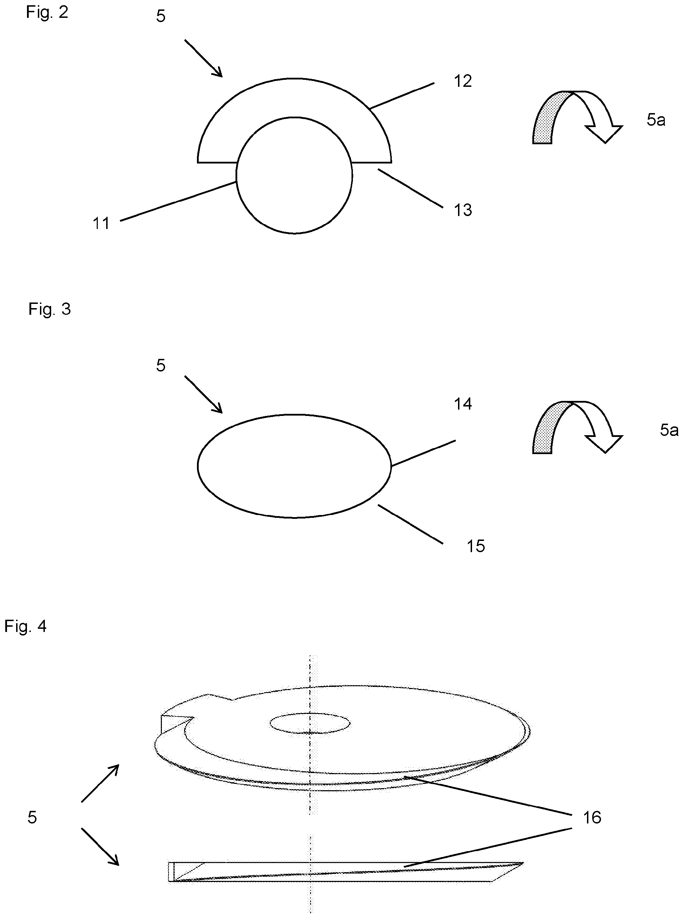

Fig. 2 shows the relieving unit (5) according to the invention with a plane geometry, which comprises a third sector of a circle (11) and a fourth sector of a circle (12) with a larger radius than the third sector of a circle (11). This fourth -sector- of a circle (12) makes up the projection of the relieving unit (5), and it is this fourth sector of a circle (12) that can interact with the tray stack (3), initially via its front edge (13) in the direction of rotation (5a).

Fig. 3 shows an alternative embodiment of the relieving unit (5) according to the invention with an eccentric plane geometry where the relieving unit can interact with the tray stack (3) via the projection around one peak (14) of the relieving unit, initially via its front edge or second front edge (15) in the direction of rotation (5a).

Fig. 4 shows a further alternative embodiment of the relieving unit (5) according to the invention, in perspective view and in sectional view, respectively. In this embodiment the second front edge (16) of the relieving unit (5) makes up the inclined area on the relieving unit (5).

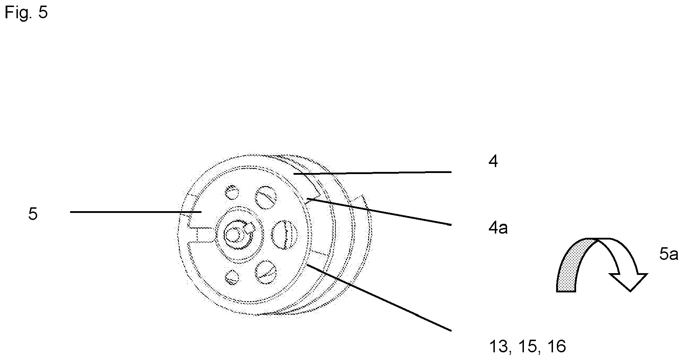

Fig. 5 shows the tray distributor (4) and the relieving unit (5). It can be seen in the figure how the second front edge (13,15,16) of the relieving unit has a positive angle relative to the first front edge (4a) of the tray distributor (4) in the direction of rotation (5a), so that the tray distributor (4) will engage with the tray stack (3) when the relieving is at the maximum.

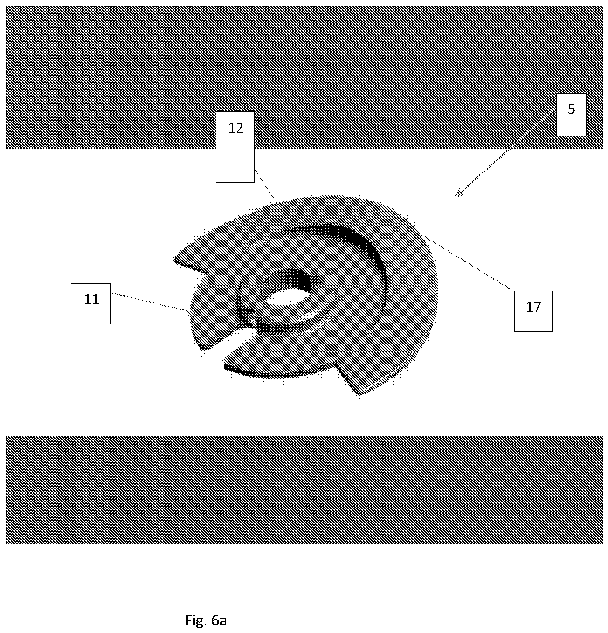

Figs. 6a-c show an alternative embodiment of the relieving unit 5 according to the invention. Fig. 6a shows the relieving unit 5 in a perspective view comprising a third sector of a circle 11 and a fourth sector of a circle 12 having a larger radius than the third sector of a circle 11. The third sector of a circle 11 of the relieving unit 5 is substantially planar and having in its centre a circumferential elevation encircling a hole for the enclosure of a rotational shaft. When the relieving unit 5 is placed in the machine and the machine is in operation, the third sector of a circle 11 is perpendicular relative to the dispensing direction 2a. The fourth sector of a circle 12 is inclined with a given inclination angle relative to the third sector of a circle 11.

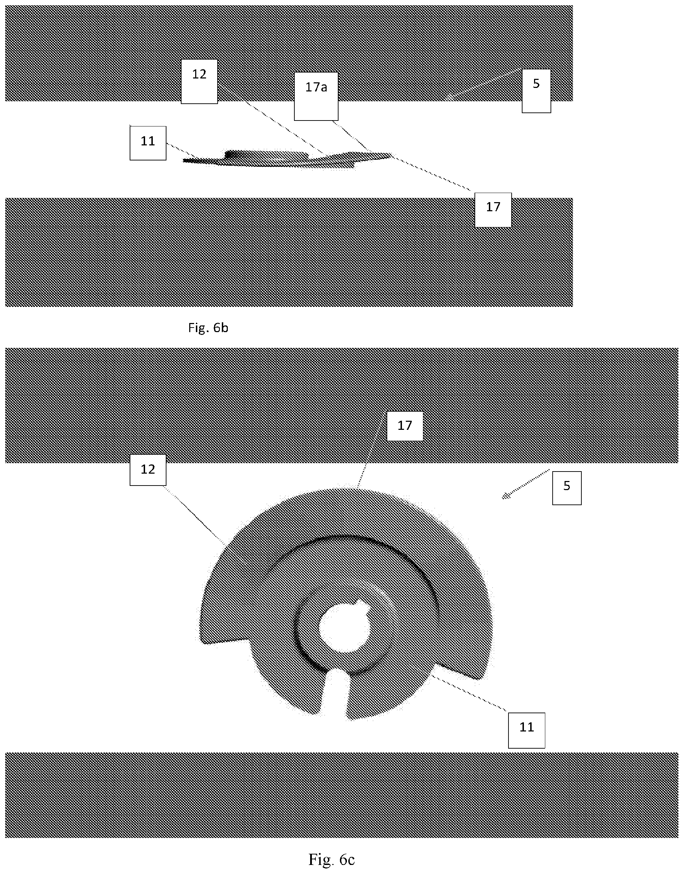

A second front edge 17 having the same function as previously described is placed on the fourth sector of a circle 12. The relieving unit 5 shown in fig. 6a is shown in fig. 6b seen from the side. The second front edge 17 comprises a substantially plane surface 17a which is substantially perpendicular relative to the selected dispensing direction 2a.

The relieving unit shown in fig. 6a is shown in fig. 6c seen from above. The figure shows that the relieving unit is formed eccentrically, since the hole location for placing around the rotational shaft is located in the centre of the third sector of a circle 11.

## Claims

1. A dispensing device (1) for dispensing trays from a tray stack (3) in a predetermined dispensing direction, where the dispensing device (1) comprises at least one dispensing unit (2) intended for repetitive dispensing of one tray at a time, and the dispensing unit (2) comprises:
- a rotational shaft (6) having a direction of rotation on which are mounted:
- a driving wheel (8),
- a disc-shaped tray distributor (4) having a first projection with a first front edge in the direction of rotation, and interacting, when the first projection during rotation faces the tray stack (3), with a first and a second tray (3b) from the bottom of the tray stack (3), and
- a spacer (7) which is placed against the tray distributor (4) in the dispensing direction (2a),
and that on the rotational shaft (6) is further mounted a disc-shaped relieving unit (5) at a distance from the tray distributor (4) and in the direction opposite to the dispensing direction (2a) and which has a second projection with a second front edge (13,15, 16,17) in the direction of rotation,**characterised** - in that at least a part of the disk-shaped relieving unit (5) is inclined relative to the predetermined dispensing direction (2a) with an inclination angle, and where the projection is located on the portion of the relieving unit (5) which is farthest from the tray distributor (4) in the direction opposite to the dispensing direction (2a), and which, when the second projection during rotation faces the tray stack (3), interacts with a second tray (3c) in the tray stack (3) for relieving of trays in front of the second tray (3c) in the dispensing direction (2a), and where the second front edge (13,15,16,17) of the disc-shaped relieving unit (5) is angular with a displacement angle relative to the first front edge of the tray distributor (4) which displacement angle is positive in the direction of rotation.

2. A dispensing device (1) according to claim 1, **characterised in that** the projection of the tray distributor (4) is provided by the tray distributor (4) having a first sector of a circle and a second sector of a circle with a larger radius than the first sector of a circle.

3. A dispensing device according to claim 1, **characterised in that** the projection of the tray distributor (4) is provided by the tray distributor (4) being designed eccentrically, having an elliptical shape.

4. A dispensing device (1) according to one or more of claims 1 to 3, **characterised in that** the projection of the disc-shaped relieving unit (5) is provided by the disc-shaped relieving unit (5) having a third sector of a circle (11) and a fourth sector of a circle (12) with a larger radius than the third sector of a circle (11).

5. A dispensing device (1) according to claim 4, **characterised in that** the fourth sector of a circle (12) covers an angle of 120-240°, preferably 160-200°.

6. A dispensing device (1) according to one or more of claims 4 to 5, **characterised in that** the third sector of a circle (11) of the disc-shaped relieving unit (5) is substantially perpendicular relative to the dispensing direction (2a) and that the fourth sector of a circle (12) is inclined with the inclination angle relative to the third sector of a circle (11).

7. A dispensing device (1) according to claim 6, **characterised in that** the second front edge (17) comprises a substantially plane surface (17a), said surface (17a) is substantially perpendicular relative to the dispensing direction (2a)

8. A dispensing device (1) according to one or more of claims 1 to 7, **characterised in that** the disc-shaped relieving unit (5) is formed eccentrically.

9. A dispensing device (1) according to claim 8, **characterised in that** the disc-shaped relieving unit (5) has an eccentricity in the range of 0.1-0.3.

10. A dispensing device (1) according to one or more of claims 1 to 9, **characterised in that** the inclination angle of the disc-shaped relieving unit (5) is in the angular interval 60-85°, preferably 70-80°, further preferably 75-80°.

11. A dispensing device (1) according to one or more of claims 1 to 10, **characterised in that** the displacement angle is in the angular interval 10-120°, preferably 20-100°, further preferably 20-40°.

12. A dispensing device (1) according to one or more of claims 1 to 11, **characterised in that** the distance between the disc-shaped relieving unit (5) and the tray distributor (4) corresponds to the height of a number of trays in the tray stack (3), where this number being in the range of 5-20, preferably 5-10.

13. A dispensing device (1) according to one or more of claims 1 to 2, **characterised in that** the dispensing device (1) comprises at least 3 dispensing units (2), preferably at least 4 dispensing units (2) working synchronously.

14. Use of the dispensing device (1) according to one or more of claims 1 to 13 for dispensing the trays, used for food.

## Patentansprüche

1. Ausgabevorrichtung (1) zum Ausgeben von Tabletts von einem Tablettstapel (3) in einer vorbestimmten Ausgaberichtung, wobei die Ausgabevorrichtung (1) mindestens eine Ausgabeeinheit (2) umfasst, die zum wiederholten Ausgeben von einem Tablett gleichzeitig vorgesehen ist, und wobei die Ausgabeeinheit (2) Folgendes umfasst:
- eine Drehwelle (6) mit einer Drehrichtung, an der montiert sind:
- ein Antriebsrad (8),
- ein scheibenförmiger Tablettverteiler (4), der einen ersten Vorsprung mit einer ersten Vorderkante in Drehrichtung aufweist, und der, wenn der erste Vorsprung während der Drehung dem Tablettstapel (3) zugewandt ist, mit einem ersten und einem zweiten Tablett (3b) von der Unterseite des Tablettstapels (3) zusammenwirkt, und
- ein Abstandsstück (7), das am Tablettverteiler (4) in Ausgaberichtung (2a) anliegt,
und wobei auf der Drehwelle (6) ferner eine scheibenförmige Entlastungseinheit (5) in einem Abstand vom Tablettverteiler (4) und in zur Ausgaberichtung (2a) entgegengesetzter Richtung montiert ist und die einen zweiten Vorsprung mit einer zweiten Vorderkante (13, 15, 16, 17) in Drehrichtung aufweist, **dadurch gekennzeichnet, dass** mindestens ein Teil der scheibenförmigen Entlastungseinheit (5) in Bezug auf die vorbestimmte Ausgaberichtung (2a) mit einem Neigungswinkel geneigt ist, und wobei sich der Vorsprung auf dem Abschnitt der Entlastungseinheit (5) befindet, der in zur Ausgaberichtung (2a) entgegengesetzten Richtung von dem Tablettverteiler (4) am weitesten entfernt ist, und der, wenn der zweite Vorsprung während der Drehung dem Tablettstapel (3) zugewandt ist, mit einem zweiten Tablett (3c) im Tablettstapel (3) zur Entlastung von Tabletts zusammenwirkt, die sich in Ausgaberichtung (2a) vor dem zweiten Tablett (3c) befinden, und wobei die zweite Vorderkante (13, 15, 16, 17) der scheibenförmigen Entlastungseinheit (5) mit einem Versatzwinkel in Bezug zur ersten Vorderkante des Tablettverteilers (4) winklig angeordnet ist, wobei der Versatzwinkel in Drehrichtung positiv ist.

2. Ausgabevorrichtung (1) nach Anspruch 1, **dadurch gekennzeichnet, dass** der Vorsprung des Tablettverteilers (4) durch den Tablettverteiler (4) bereitgestellt ist, der ein erstes Kreissegement und ein zweites Kreissegment mit einem größeren Radius als das erste Kreissegment aufweist.

3. Ausgabevorrichtung nach Anspruch 1, **dadurch gekennzeichnet, dass** der Vorsprung des Tablettverteilers (4) durch den Tablettverteiler (4) bereitgestellt ist, der exzentrisch mit einer elliptischen Form konstruiert ist.

4. Ausgabevorrichtung (1) nach einem oder mehreren der Ansprüche 1 bis 3, **dadurch gekennzeichnet, dass** der Vorsprung der scheibenförmigen Entlastungseinheit (5) durch die scheibenförmige Entlastungseinheit (5) bereitgestellt ist, die ein drittes Kreissegment (11) und ein viertes Kreissegment (12) mit einem größeren Radius als das dritte Kreissegment (11) aufweist.

5. Ausgabevorrichtung (1) nach Anspruch 4, **dadurch gekennzeichnet, dass** das vierte Kreissegment (12) einen Winkel von 120-240°, vorzugsweise 160-200° abdeckt.

6. Ausgabevorrichtung (1) nach einem oder mehreren der Ansprüche 4 bis 5, **dadurch gekennzeichnet, dass** das dritte Kreissegment (11) der scheibenförmigen Entlastungseinheit (5) im Wesentlichen senkrecht in Bezug auf die Ausgaberichtung (2a) ist, und dass das vierte Kreissegment (12) mit einem Neigungswinkel in Bezug auf das dritte Kreissegment (11) geneigt ist.

7. Ausgabevorrichtung (1) nach Anspruch 6, **dadurch gekennzeichnet, dass** die zweite Vorderkante (17) eine im Wesentlichen ebene Fläche (17a) umfasst, wobei die Fläche (17a) im Wesentlichen senkrecht in Bezug auf die Ausgaberichtung (2a) ist.

8. Ausgabevorrichtung (1) nach einem oder mehreren der Ansprüche 1 bis 7, **dadurch gekennzeichnet**, die scheibenförmige Entlastungseinheit (5) exzentrisch ausgebildet ist.

9. Ausgabevorrichtung (1) nach Anspruch 8, **dadurch gekennzeichnet, dass** die scheibenförmige Entlastungseinheit (5) eine Exzentrizität im Bereich von 0,1-0,3 aufweist.

10. Ausgabevorrichtung (1) nach einem oder mehreren der Ansprüche 1 bis 9, **dadurch gekennzeichnet, dass** der Neigungswinkel der scheibenförmigen Entlastungseinheit (5) im Winkelintervall von 60-85°, vorzugsweise 70-80°, noch bevorzugter 75-80° liegt.

11. Ausgabevorrichtung (1) nach einem oder mehreren der Ansprüche 1 bis 10, **dadurch gekennzeichnet, dass** der Versatzwinkel im Winkelintervall von 10-120°, vorzugsweise 20-100°, noch bevorzugter 20-40° liegt.

12. Ausgabevorrichtung (1) nach einem oder mehreren der Ansprüche 1 bis 11, **dadurch gekennzeichnet, dass** der Abstand zwischen der scheibenförmigen Entlastungseinheit (5) und dem Tablettverteiler (4) der Höhe von einer Anzahl von Tabletts im Tablettstapel (3) entspricht, wobei diese Anzahl im Bereich von 5-20, vorzugsweise 5-10 ist.

13. Ausgabevorrichtung (1) nach einem oder mehreren der Ansprüche 1 bis 2, **dadurch gekennzeichnet, dass** die Ausgabevorrichtung (1) mindestens 3 Ausgabeeinheiten (2), vorzugsweise mindestens 4 Ausgabeeinheiten (2) umfasst, die synchron arbeiten.

14. Verwendung der Ausgabevorrichtung (1) nach einem oder mehreren der Ansprüche 1 bis 13 zum Ausgeben der Tabletts, die für Nahrungsmittel verwendet werden.

## Revendications

1. Dispositif de distribution (1) permettant la distribution de plateaux à partir d'un empilement de plateaux (3) selon une direction de distribution prédéfinie, ledit dispositif de distribution (1) comprenant au moins une unité de distribution (2) destinée à la distribution répétitive d'un plateau à la fois et ladite unité de distribution (2) comprenant :
- un arbre de rotation (6) possédant un sens de rotation sur lequel sont montés :
- une roue d'entraînement (8),
- un distributeur de plateau en forme de disque (4) possédant une première saillie avec un premier bord avant dans le sens de rotation et interagissant, lorsque la première saillie durant la rotation fait face à l'empilement de plateaux (3), avec un premier et un second plateau (3b) provenant du bas de l'empilement de plateaux (3), et
- un élément d'espacement (7) qui est placé contre le distributeur de plateaux (4) selon la direction de distribution (2a) et **caractérisé en ce que**, sur l'arbre de rotation (6), est montée en outre une unité de libération en forme de disque (5) à une distance du distributeur de plateaux (4) et selon la direction opposée à la direction de distribution (2a) et qui possède une seconde saillie avec un second bord avant (13, 15, 16, 17)selon la direction de rotation, **caractérisé en ce qu'**au moins une partie de l'unité de libération en forme de disque (5) est inclinée par rapport à la direction de distribution (2a) prédéfinie selon un angle d'inclinaison et ladite saillie étant située sur la partie de l'unité de libération (5) qui est la plus éloignée du distributeur de plateaux (4) selon la direction opposée à la direction de distribution (2a), et qui, lorsque la seconde saillie, durant la rotation, fait face à l'empilement de plateaux (3), interagit avec un second plateau (3c) dans l'empilement de plateaux (3) permettant une libération des plateaux en avant du second plateau (3c) selon la direction de distribution (2a) et ledit second bord avant (13, 15, 16, 17) de l'unité de libération en forme de disque (5) formant un angle avec un angle de déplacement par rapport au premier bord avant du distributeur de plateaux (4), ledit angle de déplacement étant positif dans le sens de rotation.

2. Dispositif de distribution (1) selon la revendication 1, **caractérisé en ce que** la projection du distributeur de plateaux (4) est fournie par le distributeur de plateaux (4) possédant un premier secteur d'un cercle et un deuxième secteur d'un cercle avec un rayon supérieur à celui du premier secteur d'un cercle.

3. Dispositif de distribution selon la revendication 1, **caractérisé en ce que** la saillie du distributeur de plateaux (4), fournie par le distributeur de plateaux (4), est conçu de façon excentrée, possédant une forme elliptique.

4. Dispositif de distribution (1) selon l'une ou plusieurs des revendications 1 à 3, **caractérisé en ce que** la saillie de l'unité de libération en forme de disque (5) est fournie par l'unité de libération en forme de disque (5) possédant un troisième secteur d'un cercle (11) et un quatrième secteur d'un cercle (12) avec un rayon supérieur à celui du troisième secteur d'un cercle (11).

5. Dispositif de distribution (1) selon la revendication 4, **caractérisé en ce que** le quatrième secteur d'un cercle (12) couvre un angle allant de 120 à 240°, de préférence allant de 160 à 200°.

6. Dispositif de distribution (1) selon l'une ou plusieurs des revendications 4 à 5, **caractérisé en ce que** le troisième secteur d'un cercle (11) de l'unité de libération en forme de disque (5) est sensiblement perpendiculaire par rapport à la direction de distribution (2a) et **en ce que** le quatrième secteur d'un cercle (12) est incliné selon l'angle d'inclinaison par rapport au troisième secteur d'un cercle (11).

7. Dispositif de distribution (1) selon la revendication 6, **caractérisé en ce que** le second bord avant (17) comprenant une surface sensiblement plane (17a), ladite surface (17a) étant sensiblement perpendiculaire par rapport à la direction de distribution (2a).

8. Dispositif de distribution (1) selon l'une ou plusieurs des revendications 1 à 7, **caractérisé en ce que** l'unité de libération en forme de disque (5) est formée de façon excentrée.

9. Dispositif de distribution (1) selon la revendication 8, **caractérisé en ce que** l'unité de libération en forme de disque (5) possède une excentricité comprise dans la plage allant de 0,1 à 0,3.

10. Dispositif de distribution (1) selon l'une ou plusieurs des revendications 1 à 9, **caractérisé en ce que** l'angle d'inclinaison de l'unité de libération en forme de disque (5) est compris dans l'intervalle angulaire allant de 60 à 85°, de préférence allant de 70 à 80°, idéalement allant de 75 à 80°.

11. Dispositif de distribution (1) selon l'une ou plusieurs des revendications 1 à 10, **caractérisé en ce que** l'angle de déplacement est compris dans l'intervalle angulaire allant de 10 à 120°, de préférence allant de 20 à 100°, idéalement allant de 20 à 40°.

12. Dispositif de distribution (1) selon l'une ou plusieurs des revendications 1 à 11, **caractérisé en ce que** la distance entre l'unité de libération en forme de disque (5) et le distributeur de plateaux (4) correspond à la hauteur d'un nombre de plateaux dans l'empilement de plateaux (3), ce nombre étant compris dans la plage allant de 5 à 20, de préférence allant de 5 à 10.

13. Dispositif de distribution (1) selon l'une ou plusieurs des revendications 1 à 2, **caractérisé en ce que** le dispositif de distribution (1) comprend au moins 3 unités de distribution (2), de préférence au moins 4 unités de distribution (2) fonctionnant de façon synchrone.

14. Utilisation du dispositif de distribution (1) selon l'une ou plusieurs des revendications 1 à 13, pour la distribution des plateaux utilisés pour les denrées alimentaires.
